# FASCICULE DE BREVET EUROPEEN

(11) **EP 4 031 385 B1**
(45) Date de publication et mention de la délivrance du brevet: **09.08.2023**
(21) Numéro de dépôt: 20772056.6
(22) Date de dépôt: 15.09.2020
(51) Int. Cl.: B60C 15/04, B29D 30/48

(54) **TRINGLE COMPRENANT DES ENROULEMENTS SURGOMMÉS**
WULSTDRAHT MIT GUMMIBESCHICHTETEN WICKLUNGEN
BEAD WIRE COMPRISING RUBBER-COATED WINDINGS

(30) Priorité: 18.09.2019 FR 1910276
(43) Date de publication de la demande: 27.07.2022
(73) Titulaire: COMPAGNIE GENERALE DES ETABLISSEMENTS MICHELIN, 63000 Clermont-Ferrand (FR)
(72) Inventeur: MAILLARD, Sylvere, 63040 CLERMONT-FERRAND CEDEX 9 (FR); BESNARD, Nicolas, 63040 CLERMONT-FERRAND CEDEX 9 (FR); CANEVET, Guilaine, 63040 CLERMONT-FERRAND CEDEX 9 (FR); DEPARIS, Xavier, 63040 CLERMONT-FERRAND CEDEX 9 (FR); TAILLANDIER, Thierry, 63040 CLERMONT-FERRAND CEDEX 9 (FR)
(74) Mandataire: Louret, Sylvain
(86) Numéro de dépôt international: PCT/EP2020/075691
(87) Numéro de publication internationale: WO 2021/052922

(56) Documents cités:
- EP-A1- 0 252 395
- EP-A1- 0 253 208
- EP-A1- 0 938 985
- EP-A1- 2 910 391
- EP-A1- 3 013 608
- WO-A1-2017/162873

## Description

La présente invention concerne une tringle pour pneumatique, un pneumatique ainsi qu'un procédé de fabrication de cette tringle. Par pneumatique, on entend un bandage destiné à former une cavité en coopérant avec un élément support, par exemple une jante, cette cavité étant apte à être pressurisée à une pression supérieure à la pression atmosphérique. Un pneumatique selon l'invention présente une structure de forme sensiblement toroïdale de révolution autour d'un axe principal du pneumatique.

On connait de l'état de la technique un pneumatique destiné à équiper un véhicule de génie civil et vendu sous la marque MICHELIN sous la dénomination XDR3. Un tel pneumatique comprend une bande de roulement, deux bourrelets, deux flancs reliant les bourrelets à la bande de roulement et une armature de sommet, disposée circonférentiellement entre l'armature de carcasse et la bande de roulement. Chaque bourrelet comprend un élément de renfort annulaire formant une tringle, cette tringle étant de révolution autour d'un axe principal de la tringle sensiblement confondu avec l'axe principal du pneumatique.

La tringle de ce pneumatique comprend N=395 enroulements circonférentiels autour de l'axe principal de la tringle. Ces N enroulements circonférentiels sont agencés sur P=23 couches C(i), i allant de 1 à 23. Les couches C(i) sont radialement superposées les unes aux autres. Chaque couche C(i) comprend L(i)>1 enroulements circonférentiels. Les enroulements circonférentiels d'une même couche C(i) sont axialement juxtaposés les uns aux autres. Chaque enroulement circonférentiel comprend une portion d'un monofilament métallique et une couche d'un matériau polymérique, ici une composition élastomérique réticulée, revêtant la portion du monofilament métallique. Le monofilament métallique présente une section sensiblement circulaire de diamètre d=3 mm.

Afin de fabriquer cette tringle, on met en oeuvre un procédé au cours duquel on met en oeuvre une étape de revêtement du monofilament métallique par une couche du matériau polymérique de sorte que, dans un plan de coupe perpendiculaire à un axe principal du monofilament métallique revêtu de la couche de matériau polymérique, le monofilament métallique revêtu de la couche de matériau polymérique soit inscrit dans un cercle de diamètre D. En l'espèce, on revêt le monofilament métallique d'une gaine de section tubulaire d'épaisseur égale à (D-d)/2, ici d'épaisseur égale à 0,175 mm, de sorte que le monofilament métallique revêtu de la couche de matériau polymérique présente un diamètre externe D sensiblement égal à 3,35 mm. Puis, on met en oeuvre une étape d'assemblage de la tringle dans laquelle on enroule le monofilament métallique revêtu de la couche de matériau polymérique de façon à former les N enroulements circonférentiels.

Une telle tringle est relativement lourde par rapport à sa section. Ainsi, d'une part, si on souhaite augmenter la section générale de la tringle, c'est-à-dire le produit de sa largeur selon la direction axiale par sa hauteur selon la direction radiale, par exemple pour améliorer certaines propriétés du pneumatique, la masse augmente fortement et nécessite l'utilisation d'installations spécifiques afin de ne serait-ce que manipuler la tringle. D'autre part, si on souhaite conserver une section générale sensiblement identique, il est souhaitable de réduire la masse de la tringle afin de réduire les coûts qui y sont associés.

Les documents EP 0 938 985 A1, EP 0 252 395 A1, EP 2 910 391 A1 et EP 0 253 208 A1 montrent des tringles pour pneumatique comprenant des enroulements circonférentiels de révolution autour d'un axe principal de la tringle.

L'invention a pour but une tringle pour pneumatique présentant un compromis entre la masse et la section générale de la tringle amélioré par rapport à l'état de la technique.

A cet effet, l'invention a pour objet une tringle pour pneumatique, la tringle étant de révolution autour d'un axe principal de la tringle et comprenant N>1 enroulements circonférentiels autour de l'axe principal de la tringle, les N enroulements circonférentiels étant agencés sur P>1 couches C(i) radialement superposées, i variant de 1 à P, chaque couche C(i) comprenant L(i)>1 enroulements circonférentiels axialement juxtaposés, chaque enroulement circonférentiel comprenant une portion d'un monofilament métallique de diamètre d et une couche d'un matériau présentant une densité inférieure à la densité du monofilament métallique, la couche revêtant la portion de monofilament métallique de sorte que chaque enroulement circonférentiel est, dans un plan de coupe radial parallèle à l'axe principal de la tringle, inscrit dans un cercle de diamètre D, le rapport D/d étant supérieur ou égal à 1,15.

Grâce à un rapport D/d supérieur ou égal à 1,15, pour une même section de la tringle, on réduit la masse de la tringle, le matériau de la couche présentant une densité inférieure à la densité du monofilament métallique.

Par monofilament métallique, on entend par définition un monofilament constitué intégralement (pour 100% de sa masse) d'un ou de plusieurs matériaux métalliques. Le monofilament métallique comprend préférentiellement une âme en acier, plus préférentiellement en acier perlitique ou ferrito-perlitique au carbone, appelé couramment par l'homme du métier acier au carbone, ou encore en acier inoxydable (par définition, acier comportant au moins 10,5% de chrome) et une couche métallique revêtant l'âme en acier, la couche métallique étant constitué d'un métal pur ou un d'un alliage de métaux purs choisis parmi le cuivre, le zinc et l'étain. Dans d'autres modes de réalisation, le monofilament est constitué de l'âme en acier sans que celle-ci ne soit revêtue d'une couche métallique.

La densité du monofilament métallique est le rapport de la masse volumique d'un échantillon du monofilament métallique sur la masse volumique de l'eau. La masse volumique de l'échantillon de monofilament métallique est déterminé en calculant le rapport de la masse de cet échantillon sur le volume de cet échantillon. De façon analogue, la densité du matériau constituant la couche est le rapport de la masse volumique d'un échantillon du matériau constituant la couche sur la masse volumique de l'eau. La masse volumique de l'échantillon du matériau constituant la couche est déterminé en calculant le rapport de la masse de cet échantillon sur le volume de cet échantillon. Ces mesures sont effectuées dans des conditions métrologiques classiques et connues par l'homme du métier.

Chaque portion du monofilament métallique revêtu forme un élément filaire comprenant une âme métallique constituée par la portion du monofilament métallique et une couche revêtant l'âme métallique, la couche étant constituée par le matériau de densité inférieure à celle monofilament métallique. L'ensemble des portions du monofilament métallique revêtu forme les N enroulements circonférentiels de la tringle.

Le monofilament métallique présente une section sensiblement circulaire de diamètre d.

Par inscrit dans un cercle de diamètre D, on entend que la surface externe de la couche de chaque enroulement est inscrite dans le cercle de diamètre D et y est tangente en au moins deux points.

L'invention permet notamment, dans le cas où on souhaite augmenter la section générale d'une tringle donnée, de limiter l'augmentation de la masse de façon significative. Cette augmentation de la section générale peut être réalisée en augmentant le nombre d'enroulements circonférentiels N et/ou en augmentant le diamètre d.

L'invention permet également, dans le cas où on souhaite conserver la section générale d'une tringle donnée, de réduire sa masse. Cette réduction de masse peut être réalisée en réduisant le nombre d'enroulements circonférentiels N tout en conservant le diamètre d et donc en réduisant la masse de monofilament métallique par rapport à la tringle donnée.

On pourra ainsi, dans différents modes de réalisation, utiliser un monofilament métallique présentant une résistance mécanique allant de 1000 MPa à 5000 MPa. De telles résistances mécaniques correspondent aux grades d'acier couramment rencontrés dans le domaine du pneumatique, à savoir, les grades NT (Normal Tensile), HT (High Tensile), ST (Super Tensile), SHT (Super High Tensile), UT (Ultra Tensile), UHT (Ultra High Tensile) et MT (Mega Tensile). Ainsi, afin d'alléger la tringle tout en conservant sa section, on pourra augmenter la résistance mécanique, ce qui permettra de réduire le diamètre du monofilament métallique et donc la masse de monofilament métallique.

Par enroulement circonférentiel, on entend la portion de monofilament métallique revêtu faisant un tour complet de révolution autour de l'axe principal de la tringle. Le monofilament métallique revêtu est préférentiellement continu de sorte que la tringle est préférentiellement formée par enroulage continu du monofilament métallique revêtu sur N enroulements circonférentiels.

Par direction axiale, on entend la direction sensiblement parallèle à l'axe principal de la tringle ou l'axe de rotation du pneumatique, ces deux axes étant confondus une fois la tringle incorporée dans le pneumatique.

Par direction circonférentielle, on entend la direction qui est sensiblement perpendiculaire à la fois à la direction axiale et à un rayon de la tringle ou du pneumatique (en d'autres termes, tangente à un cercle dont le centre est sur l'axe principal de la tringle ou l'axe de rotation du pneumatique).

Par direction radiale, on entend la direction selon un rayon de la tringle ou du pneumatique, c'est-à-dire une direction quelconque intersectant l'axe principal de la tringle ou l'axe de rotation du pneumatique et sensiblement perpendiculairement à cet axe.

Un plan de coupe radial parallèle à l'axe principal de la tringle ou de rotation du pneumatique est un plan parallèle à la fois à la direction radiale et à la direction axiale. Un plan de coupe radial est également perpendiculaire à la direction circonférentielle au point d'intersection entre ce plan de coupe radial et la direction circonférentielle. Une vue en coupe radiale de la tringle ou du pneumatique est une vue de la tringle ou du pneumatique dans un plan de coupe radial parallèle à l'axe principal de la tringle ou de rotation du pneumatique.

Dans un plan de coupe radial parallèle à l'axe principal de la tringle, la tringle, de par sa géométrie de révolution autour de l'axe principal, présente deux demi-sections disposées de part et d'autre de l'axe principal de la tringle.

Tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Dans un mode de réalisation préféré, le matériau de la couche est un matériau polymérique. Par matériau polymérique, on entend un matériau comprenant au moins un polymère. Un polymère est une macromolécule issu de la polymérisation d'un ou de plusieurs monomères. Parmi les polymères préférés, on citera les polymères thermoplastiques, les polymères thermodurcissables et les polymères co-réticulables. Parmi les polymères thermoplastiques, on citera par exemple les polyesters, les polyamides aromatiques, les polyamides aliphatiques, les polyuréthanes, les élastomères thermoplastiques, de préférence les élastomères dièniques thermoplastiques, les copolymères de ces polymères et les mélanges de ces polymères. Parmi les polymères thermodurcissables, on citera les résines aminoplastes, phénoplastes, les polyuréthanes, les résines vinylesters et les mélanges de ces polymères. Parmi les polymères co-réticulables, on citera les polymères comprenant au moins une insaturation ou double liaison, par exemple et de manière très préférée les élastomères diéniques. Le matériau polymérique peut évidemment comprendre d'autres constituants, par exemple un système de réticulation, des charges, des résines ou bien encore d'autres additifs couramment utilisés dans le domaine du pneumatique.

En plus de la réduction de la masse de la tringle, la couche de matériau polymérique permet de créer une interface entre enroulements circonférentiels radialement et/ou axialement adjacents procurant une adhérence suffisante pour manipuler la tringle sans que la structure des enroulements circonférentiels ne soit endommagée.

Avantageusement, afin, de réduire le plus possible la masse de la tringle, la densité du matériau de la couche est inférieure ou égale à 3, de préférence inférieure ou égale à 2 et plus préférentiellement inférieure ou égale à 1,5.

Dans un mode de réalisation préféré, le rapport D/d est inférieur ou égal à 2.

Dans un mode de réalisation encore plus préféré, le rapport D/d va de 1,30 à 1,80.

Un rapport D/d trop important entraine une décohésion mécanique des enroulements adjacents du fait d'une épaisseur de la couche trop importante et un fonctionnement mécanique dans lequel chaque enroulement travaille de façon indépendante par rapport aux enroulements qui lui sont adjacents. Or, afin de maximiser les propriétés mécaniques de la tringle, notamment les propriétés de force à rupture et de résistance à la fatigue, les inventeurs ont constaté qu'il était préférable que chaque enroulement travaille simultanément avec les enroulements qui lui sont adjacents et donc qu'il est préférable d'avoir un rapport D/d modéré et donc préférentiellement inférieur ou égal à 2 et plus préférentiellement inférieur ou égal à 1,80.

Dans un mode de réalisation avantageux, la couche forme une gaine de section sensiblement tubulaire d'épaisseur égale à (D-d)/2. La section de la gaine est observée dans le plan de coupe radial parallèle à l'axe principal. Une telle gaine de section tubulaire est relativement facile à déposer sur le monofilament métallique, par exemple au moyen d'une extrudeuse et d'une filière, comme cela est décrit dans WO2017/050780.

On pourra également envisager d'autres modes de réalisation dans lesquels la couche forme une gaine de section polygonale, par exemple triangulaire, rectangulaire, carrée, hexagonale ou encore octogonale.

Dans des modes de réalisation de tringles destinées à des pneumatiques pour véhicules lourds choisis parmi les engins de génie civil, les camions et les engins agricoles, l'épaisseur (D-d)/2 est supérieure ou égale à 0,18 mm, de préférence va de 0,18 mm à 1,00 mm et plus préférentiellement va de 0,25 mm à 0,80 mm.

Dans une variante permettant de fabriquer des tringles de grandes dimensions, l'épaisseur (D-d)/2 va de 0,40 mm à 0,80 mm et de préférence 0,50 mm à 0,70 mm. Dans une autre variante permettant de fabriquer des tringles de dimensions plus réduites, l'épaisseur (D-d)/2 va de 0,25 mm à 0,65 mm, de préférence de 0,25 mm à 0,45 mm.

Dans des modes de réalisation de tringles destinées à des pneumatiques pour véhicules lourds choisis parmi les engins de génie civil, les camions et les engins agricoles, d est strictement inférieur à 3,00 mm, de préférence va de 1,25 mm à 2,90 mm, plus préférentiellement de 1,60 à 2,50 mm et encore plus préférentiellement de 1,80 mm à 2,40 mm.

Dans des modes de réalisation de tringles destinées à des pneumatiques pour véhicules lourds choisis parmi les engins de génie civil, les camions et les engins agricoles, D est strictement inférieur à 3,35 mm, de préférence va de 1,75 mm à 3,30 mm, plus préférentiellement va de 2,30 mm à 3,30 mm et encore plus préférentiellement va de 2,50 mm à 3,30 mm.

Dans une variante permettant de fabriquer des tringles de grandes dimensions, D va de 2,80 mm à 3,30 mm. Dans une autre variante permettant de fabriquer des tringles de dimensions plus réduites, D va de 2,50 mm à 2,90 mm.

La tringle présente :
- un diamètre moyen Dm, exprimé en mm et défini comme la distance séparant radialement, dans le plan de coupe radial parallèle à l'axe principal de la tringle, les centres des cercles circonscrits à chaque demi-section de la tringle dans le plan de coupe radial,
- une masse M, exprimée en g,
- chaque enroulement circonférentiel présentant, dans le plan de coupe radial parallèle à l'axe principal de la tringle, une section de surface S, exprimée en mm2, et dans laquelle 1000 x M/ (N x S x π x Dm) est inférieur ou égal à 2,10, de préférence inférieur ou égal à 2,00, plus préférentiellement inférieur ou égal à 1,75.

Le rapport 1000 x M/ (N x S x π x Dm) représente la densité moyenne de la tringle. Plus ce rapport est petit, plus la tringle sera allégée et ce indépendamment de sa section. La section S de chaque monofilament revêtu est déterminée par la relation S=π x (D/2)².

De façon avantageuse, 1000 x M/ (N x S x π x Dm) est supérieur ou égal à 1,00, de préférence supérieur ou égal à 1,15.

Dans une variante permettant de fabriquer des tringles de grandes dimensions, 1000 x M/ (N x S x π x Dm) est inférieur ou égal à 1,50, de préférence inférieur ou égal à 1,35. Dans une autre variante permettant de fabriquer des tringles de dimensions plus réduites, 1000 x M/ (N x S x π x Dm) est inférieur ou égal à 1,70.

De façon avantageuse, la tringle présente une masse M, exprimée en g, et une masse métallique Ma égale à la masse du monofilament métallique, exprimée en g telles que Ma/M est inférieur ou égal à 0,95, de préférence inférieur ou égal à 0,92 et plus préférentiellement inférieur ou égal à 0,90. Ainsi, on réduit significativement la masse de métal par rapport à la tringle de l'état de la technique, c'est-à-dire la proportion massique de métal dans la tringle. La masse de métal peut être déterminée en mesurant la longueur totale des enroulements circonférentiels et en multipliant cette dernière par la section du monofilament métallique Sa= π x (d/2)² et par la densité du monofilament métallique. Par exemple, pour un monofilament en acier au carbone, la densité du monofilament est sensiblement égale à 7,8. La masse de métal peut également être mesurée en retirant, par exemple par traitement chimique, la couche de matériau revêtant le monofilament métallique, et en pesant le monofilament métallique ainsi obtenu.

De façon avantageuse, Ma/M est supérieur ou égal à 0,50, de préférence supérieur ou égal à 0,75.

Dans une variante permettant de fabriquer des tringles de grandes dimensions, Ma/M est inférieur ou égal à 0,85. Dans une autre variante permettant de fabriquer des tringles de dimensions plus réduites, Ma/M est inférieur ou égal à 0,90.

De façon avantageuse, dans le plan de coupe radial parallèle à l'axe principal de la tringle, chaque enroulement circonférentiel présentant une section de monofilament métallique de surface Sa, exprimée en mm², et chaque enroulement circonférentiel présentant une section de surface S, exprimée en mm², le rapport Sa/S est inférieur ou égal à 0,75, de préférence inférieur ou égal à 0,65, plus préférentiellement inférieur ou égal à 0,60. Ainsi, pour une section du monofilament métallique donné, on réduit la masse de métal par rapport à la tringle de l'état de l'état de la technique. La section Sa de monofilament métallique de chaque enroulement circonférentiel est déterminé par la relation Sa= π x (d/2)².

De façon avantageuse, Sa/S est supérieur ou égal à 0,30, de préférence supérieur ou égal à 0,35.

Dans une variante permettant de fabriquer des tringles de grandes dimensions, Sa/S est inférieur ou égal à 0,50, de préférence inférieur ou égal à 0,45. Dans une autre variante permettant de fabriquer des tringles de dimensions plus réduites, Sa/S est inférieur ou égal à 0,60.

Dans des modes de réalisation de tringles destinées à des pneumatiques pour véhicules lourds choisis parmi les engins de génie civil, les camions et les engins agricoles, N va de 100 à 1000.

Dans une variante permettant de fabriquer des tringles de grandes dimensions, N va de 400 à 900, de préférence va de 600 à 850. Dans une autre variante permettant de fabriquer des tringles de dimensions plus réduites, N va de 100 à 200, de préférence va de 100 à 150.

Dans des modes de réalisation de tringles destinées à des pneumatiques pour véhicules lourds choisis parmi les engins de génie civil, les camions et les engins agricoles, P va de 10 à 40.

Dans une variante permettant de fabriquer des tringles de grandes dimensions, N va de 25 à 40, de préférence va de 25 à 35. Dans une autre variante permettant de fabriquer des tringles de dimensions plus réduites, N va de 10 à 25, de préférence va de 10 à 20.

Dans un mode de réalisation favorisant la rotation des produits adjacents à la tringle autour de la direction circonférentielle de la tringle, notamment lors du procédé de fabrication de l'ébauche crue du pneumatique, la tringle présente, dans un plan de coupe radial parallèle à l'axe principal de la tringle, une demi-section de forme sensiblement hexagonale.

Par sensiblement hexagonale, on entend une demi-section délimitée par six faces, au moins 90% des enroulements circonférentiels externes de la tringle délimitant les faces. Par enroulement circonférentiel externe, on entend un enroulement circonférentiel qui ne comprend pas d'enroulement circonférentiel adjacent sur au moins un de ses côtés axial et/ou radial. Ces six faces comprennent une face radiale radialement externe et une face radiale radialement interne, la face radialement externe étant sensiblement parallèle à la face radialement interne. Ces six faces comprennent également des première et deuxième faces axiales radialement externes ainsi que des première et deuxième faces axiales radialement internes.

Dans un mode de réalisation, la couche C(1) étant la couche radialement la plus interne par rapport à l'axe principal de la tringle et la couche C(P) étant la couche radialement la plus externe par rapport à l'axe principal de la tringle, il existe une couche C(k) avec k ∈ ]1, P[ agencée radialement entre la couche C(1) et la couche C(P) telle que :
- pour i allant de 2 à k-1, L(i-1)<L(i),
- L(k)<L(k-1) et L(k)<L(k+1) et L(k-1)=L(k+1),
- pour i allant de k+1 à P-1, L(i)>L(i+1),
chaque couche C(i) étant agencée radialement à l'extérieur de la couche C(i-1).

Ainsi, les efforts axiaux s'exerçant sur les enroulements circonférentiels axialement les plus externes sont répartis sur les deux enroulements circonférentiels des couches C(k-1) et C(k+1) ce qui réduit la pression par rapport au cas où l'enroulement circonférentiel axialement le plus externe serait uniquement celui la couche C(k). On augmente ainsi la durée de vie du pneumatique.

Avantageusement, chaque couche C(i) étant agencée radialement à l'extérieur de la couche C(i-1), |L(i)-L(i-1)|=1 pour i allant de 2 à P. Ainsi, on favorise la stabilité de la tringle.

De façon préférée, la tringle présente, dans le plan de coupe radial parallèle à l'axe principal de la tringle, une demi-section présentant un plan de symétrie radial perpendiculaire à l'axe principal de la tringle. D'une part, un tel plan de symétrie radial permet une rotation aisée des masses de compositions adjacentes, notamment dans le cas de procédé de fabrication de pneumatique comprenant une étape durant laquelle ces masses de compositions adjacentes tournent autour de la tringle. D'autre part, un tel plan de symétrie radial permet un fonctionnement mécanique homogène de la tringle de part et d'autre de ce plan. Enfin, la tringle est dé-latéralisée, c'est-à-dire qu'elle ne présente pas deux côtés différents par rapport au plan de symétrie radial qui rendraient nécessaire une orientation radiale spécifique lors de son utilisation.

De façon également préférée, la tringle présente, dans le plan de coupe radial parallèle à l'axe principal de la tringle, une demi-section présentant un plan de symétrie circonférentiel parallèle à l'axe principal de la tringle. De façon analogue au plan de symétrie radial, le plan de symétrie circonférentiel permet, d'une part, une rotation aisée des masses de compositions adjacentes et, d'autre part, un fonctionnement mécanique homogène de la tringle de part et d'autre de ce plan.

Dans un mode de réalisation permettant de favoriser la co-réticulation entre le matériau de la couche et les compositions adjacentes du pneumatique, généralement à base d'un élastomère, de préférence un élastomère diénique, et d'un système de réticulation, le matériau de la couche est à base d'une composition élastomérique réticulable.

Par composition élastomérique réticulable, on entend que la composition comprend au moins un élastomère, de préférence un élastomère diénique, un système de réticulation et une charge. Les compositions utilisées sont des compositions conventionnelles pour calandrage d'éléments filaires de renfort métalliques, comprennent un élastomère diénique, par exemple du caoutchouc naturel, une charge renforçante, par exemple du noir de carbone et/ou de la silice, un système de réticulation, par exemple un système de vulcanisation, de préférence comprenant du soufre, ou un système de réticulation moléculaire, de préférence comprenant un peroxyde.

Par l'expression "à base de", il faut entendre que le matériau de la couche comporte le mélange et/ou le produit de réaction in situ des différents constituants utilisés, certains de ces constituants pouvant réagir et/ou étant destinés à réagir entre eux, au moins partiellement, lors des différentes phases de fabrication de la composition élastomérique réticulable; la composition élastomérique réticulable pouvant ainsi être à l'état partiellement réticulé ou à l'état non-réticulé.

Dans un mode de réalisation avantageux permettant de maintenir aisément les enroulements circonférentiels les uns au contact des autres, la tringle comprend une gaine d'habillage des enroulements circonférentiels radialement et axialement externes.

La gaine d'habillage est préférentiellement à base d'une composition élastomérique réticulable, ie comprenant au moins un élastomère, de préférence un élastomère diénique, un système de réticulation et une charge. Cela permet de favoriser la co-réticulation entre la gaine d'habillage et les compositions adjacentes du pneumatique, généralement à base d'un élastomère de, préférence un élastomère diénique, et d'un système de réticulation.

De façon analogue au matériau polymérique, par l'expression "à base de", il faut entendre que la gaine d'habillage comporte le mélange et/ou le produit de réaction in situ des différents constituants utilisés, certains de ces constituants pouvant réagir et/ou étant destinés à réagir entre eux, au moins partiellement, lors des différentes phases de fabrication de la composition élastomérique réticulable; la composition élastomérique réticulable pouvant ainsi être à l'état partiellement réticulé ou à l'état non-réticulé.

Dans un mode de réalisation préféré, la gaine d'habillage présente la forme d'une bande enroulée en hélice autour des enroulements circonférentiels radialement et axialement externes de la tringle.

Par enroulement circonférentiel radialement externe, on entend un enroulement circonférentiel qui ne comprend pas d'enroulement circonférentiel adjacent sur au moins un de ses côtés radiaux. Par enroulement circonférentiel axialement externe, on entend un enroulement circonférentiel qui ne comprend pas d'enroulement circonférentiel adjacent sur au moins un de ses côtés axiaux.

L'invention a également pour objet un pneumatique obtenu par un procédé comprenant:
- une étape d'assemblage d'une ébauche crue du pneumatique comprenant une étape de noyage d'une tringle telle que définie précédemment dans une composition élastomérique réticulable,
- une étape de chauffage de l'ébauche crue du pneumatique de façon à faire réticuler la composition élastomérique réticulable dans laquelle est noyée la tringle.

Par ébauche crue, on entend de façon connue par l'homme du métier, l'assemblage de différents produits comprenant des compositions élastomériques réticulables à l'état non-réticulé. On distingue une ébauche crue du pneumatique du pneumatique final qui lui comprend l'assemblage des différents produits comprenant les compositions élastomériques à l'état réticulé.

A l'issue de l'étape de chauffage, la tringle est noyée dans une matrice élastomérique. Par matrice élastomérique, on entend une matrice à comportement élastomérique. La matrice élastomérique est issue de la réticulation de la composition élastomérique réticulable et est, à cet effet, à base de la composition élastomérique réticulable.

Les pneumatiques de l'invention peuvent être destinés à des véhicules à moteur de tourisme (comprenant notamment les véhicules 4x4 et les "SUV" (Sport Utility Vehicles)), mais également à des véhicules deux-roues tels que motos, ou à des véhicules lourds choisis parmi les engins de génie civil, les camions et les engins agricoles. De façon très préférentielle, les pneumatiques de l'invention sont destinés à des véhicules lourds choisis parmi les engins de génie civil, les camions et les engins agricoles.

Avantageusement, le pneumatique comprend un sommet comprenant une bande de roulement et une armature de sommet, deux flancs, deux bourrelets, chaque flanc reliant chaque bourrelet au sommet, l'armature de sommet s'étendant dans le sommet selon une direction circonférentielle du pneumatique, le pneumatique comprenant une armature de carcasse ancrée dans chacun des bourrelets et s'étendant dans les flancs et dans le sommet, l'armature de sommet étant radialement intercalée entre l'armature de carcasse et la bande de roulement, chaque bourrelet comprenant une tringle telle que décrite ci-dessus.

L'invention a également pour objet un procédé de fabrication d'une tringle pour pneumatique, la tringle étant de révolution autour d'un axe principal de la tringle, comprenant :
- une étape de revêtement d'un monofilament métallique de diamètre d par une couche d'un matériau présentant une densité inférieure à la densité du monofilament métallique de sorte que, dans un plan de coupe perpendiculaire à un axe principal du monofilament métallique revêtu de la couche, le monofilament métallique revêtu de la couche est inscrit dans un cercle de diamètre D,
- une étape d'assemblage de la tringle dans laquelle on enroule le monofilament métallique revêtu de la couche de façon à former N>1 enroulements circonférentiels du monofilament métallique revêtu de la couche autour de l'axe principal (A) de la tringle, chaque enroulement circonférentiel comprenant une portion du monofilament métallique et la couche revêtant la portion de monofilament métallique, les N enroulements circonférentiels étant agencés sur P>1 couches C(i) radialement superposées, i variant de 1 à P, chaque couche C(i) comprenant L(i)>1 enroulements circonférentiels axialement juxtaposés, l'étape de revêtement étant réalisée de sorte que le rapport D/d est supérieur ou égal à 1,15 et la tringle présente :
   - un diamètre moyen Dm, exprimé en mm et défini comme la distance séparant radialement, dans le plan de coupe radial parallèle à l'axe principal de la tringle, les centres des cercles circonscrits à chaque demi-section de la tringle dans le plan de coupe radial,
   - une masse M, exprimée en g,
   - chaque enroulement circonférentiel présentant, dans le plan de coupe radial parallèle à l'axe principal de la tringle, une section de surface S, exprimée en mm², et dans laquelle 1000 x M/ (N x S x π x Dm) est inférieur ou égal à 2,10 , de préférence inférieur ou égal à 2,00, plus préférentiellement inférieur ou égal à 1,75.

L'invention sera mieux comprise à la lecture de la description qui va suivre, donnée uniquement à titre d'exemple non limitatif et faite en se référant aux dessins dans lesquels:
- la figure 1 est une vue, dans un plan de coupe radial parallèle à l'axe de rotation du pneumatique, d'un pneumatique selon l'invention comprenant une tringle selon un premier mode de réalisation de l'invention;
- la figure 2 est une vue, dans un plan de coupe radial parallèle à l'axe principal de la tringle de la figure 1, des deux demi-sections de la tringle de la figure 1;
- la figure 3 est une vue, dans un plan de coupe radial parallèle à l'axe principal de la tringle de la figure 1, d'une demi-section d'une tringle selon le premier mode de réalisation avant incorporation dans le pneumatique de la figure 1;
- la figure 4 est une vue de détails de la figure 3 d'un enroulement circonférentiel du monofilament métallique revêtu;
- la figure 5 est un graphique illustrant la variation de la masse d'une tringle de l'état de la technique en fonction de sa section ;
- la figure 6 est un graphique représentant les variations de la masse et de la section d'une tringle comprenant des enroulements circonférentiels d'un monofilament métallique revêtu en fonction du rapport D/d ;
- la figure 7 est une vue analogue à celle de la figure 3 d'une tringle selon un deuxième mode de réalisation de l'invention avant incorporation dans un pneumatique.

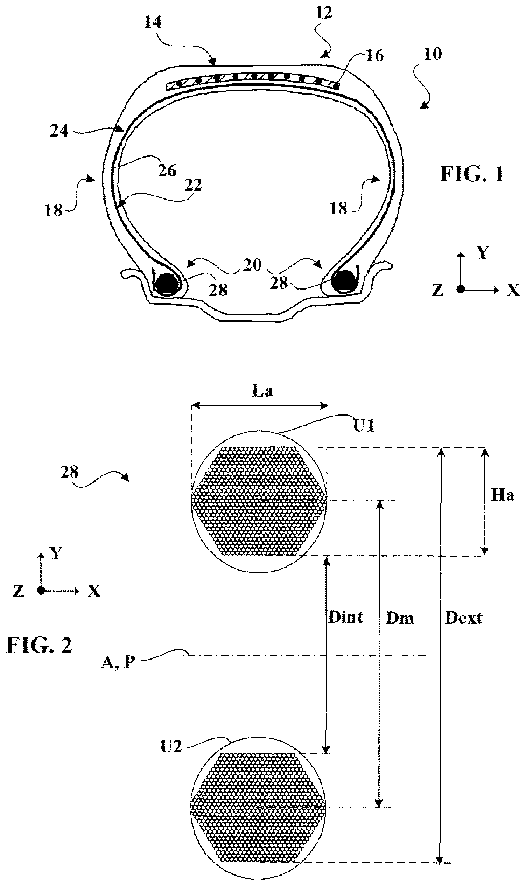

Sur les figures 1 à 7, on a représenté un repère X, Y, Z correspondant aux directions habituelles respectivement axiale (X), radiale (Y) et circonférentielle (Z) d'un pneumatique de révolution autour d'un axe principal de rotation P du pneumatique. Ces directions sont analogues pour la tringle selon l'invention qui présente également les mêmes directions axiale (X), radiale (Y) et circonférentielle (Z) d'une tringle de révolution autour d'un axe principal A de la tringle, l'axe A étant sensiblement parallèle à la direction axiale X.

On a représenté schématiquement sur la figure 1, une vue en coupe radiale, d'un pneumatique selon l'invention et désigné par la référence générale 10. Le pneumatique 10 est ici destiné à un véhicule lourd choisi parmi les engins de génie civil, les camions et les engins agricoles. En l'espèce, le pneumatique 10 est destiné à un engin de génie civil.

En référence à la figure 1, le pneumatique 10 comprend un sommet 12 comprenant une bande de roulement 14 et une armature de sommet 16, deux flancs 18, deux bourrelets 20, chaque flanc 18 reliant chaque bourrelet 20 au sommet 12. L'armature de sommet 16 s'étend dans le sommet 12 selon la direction circonférentielle Z du pneumatique 10. Le pneumatique 10 comprend une armature de carcasse 22 ancrée dans chacun des bourrelets 20 et s'étendant dans les flancs 18 et dans le sommet 12, l'armature de sommet 16 étant radialement intercalée entre l'armature de carcasse 22 et la bande de roulement 14. L'armature de carcasse 24 comprend au moins une nappe de carcasse 26. Chaque bourrelet 20 comprend une tringle 28 autour de laquelle est enroulée au moins en partie l'armature de carcasse 24 et ici la nappe de carcasse 26.

En référence aux figures 2, 3 et 4, la tringle 28 comprend N>1 enroulements circonférentiels 30 d'un monofilament métallique revêtu 32 autour de l'axe principal A de la tringle 28. N=va de 100 à 1000 et dans ce premier mode de réalisation, N va de 400 à 900, de préférence de 600 à 850 et ici N=750. Les N enroulements circonférentiels 30 sont agencés sur P>1 couches C(i) radialement superposées les unes sur les autres. P va de 10 à 40 et dans ce premier mode de réalisation, P va de 25 à 40, de préférence de 25 à 35 et ici P=31. Pour chaque valeur de i allant de 1 à 31, chaque couche C(i) comprend L(i)>1 enroulements circonférentiels 30 du monofilament métallique revêtu 32 axialement juxtaposés les uns aux autres. Chaque couche C(i) est agencée radialement à l'extérieur de la couche C(i-1) et radialement à l'intérieur de la couche C(i+1).

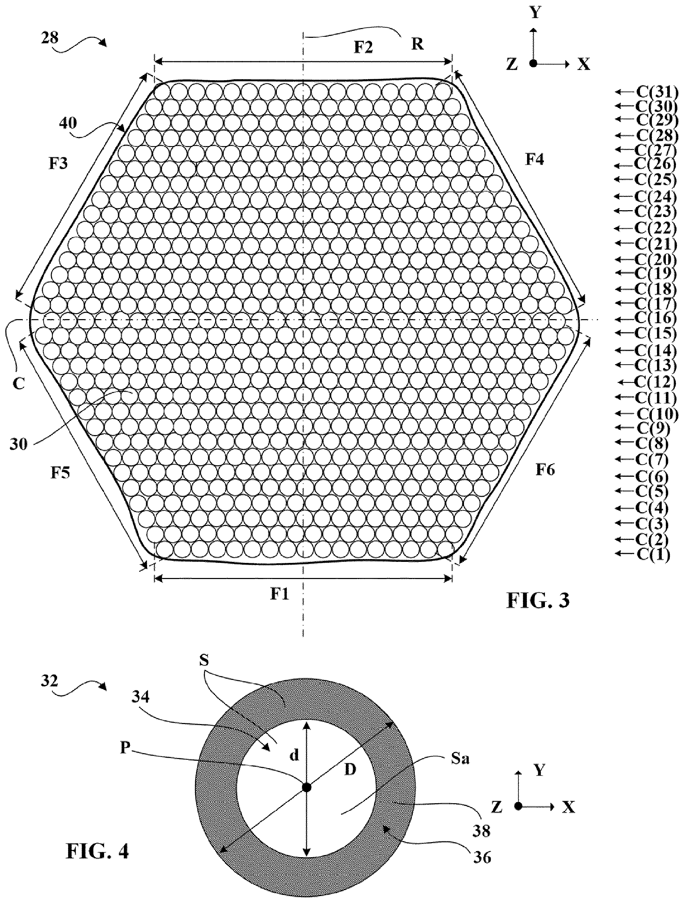

La tringle 28 présente, dans le plan de coupe radial XY parallèle à l'axe principal A de la tringle 28 dans lequel est représentée la tringle de la figure 3, une demi-section de forme sensiblement hexagonale. La demi-section de la tringle 28 représentée sur la figure 3 est délimitée par une face radiale radialement interne F1 et une face radiale radialement externe F2, la face F2 étant sensiblement parallèle à la face F1. La demi-section de la tringle 28 est également délimitée par des première et deuxième faces axiales radialement externes F3, F4 ainsi que des première et deuxième faces axiales radialement internes F5, F6. La tringle 28 comprend un total de 92 enroulements circonférentiels axialement et/ou radialement externes, 90 de ces enroulements circonférentiels axialement et/ou radialement externes délimitant les faces F1 à F6 et 2 de ces enroulements circonférentiels appartenant à la couche C(16) et à aucune des faces F1 à F6. Ainsi, 98% des enroulements circonférentiels axialement et/ou radialement externes délimitent les faces F1 à F6.

Comme illustré sur la figure 3, dans le plan de coupe radial XY parallèle à l'axe principal A de la tringle 28, la tringle 28 présente une demi-section présentant un plan de symétrie radial R perpendiculaire à l'axe principal A de la tringle 28 et parallèle à un plan circonférentiel YZ. La tringle 28 présente également une demi-section présentant un plan de symétrie circonférentiel C parallèle à l'axe principal A de la tringle 28 et perpendiculaire à la direction radiale Y. La tringle 28 comprend également une gaine 40 d'habillage des enroulements circonférentiels radialement et axialement externes délimitant les faces F1 à F6. Cette gaine 40 est à base d'une composition élastomérique réticulable présentant un module sécant élastique en extension à 10% d'allongement relativement élevé, par exemple tel que décrit dans la demande WO2016/116471.

La couche C(1) est la couche radialement la plus interne par rapport à l'axe A de la tringle 28 et la couche C(31) est la couche radialement la plus externe par rapport à l'axe A de la tringle 28. Au sein de la tringle 28, il existe une couche C(k) avec k ∈ ]1, P[, ici k=16, agencée radialement entre la couche C(1) et la couche C(31) telle que, d'une part, pour i allant de 2 à 15, L(i-1)<L(i), d'autre part, L(16)<L(15) et L(16)<L(17) et L(15)=L(17), et enfin pour i allant de 17 à 30, L(i)>L(i+1). On notera que |L(i)-L(i-1)|=1 pour i allant de 2 à 31. Plus précisément, on a C(1)=17, C(2)=18, C(3)=19, C(4)=20, C(5)=21, C(6)=22, C(7)=23, C(8)=24, C(9)=25, C(10)=26, C(11)=27, C(12)=28, C(13)=29, C(14)=30, C(15)=31, C(16)=30, C(17)=31, C(18)=30, C(19)=29, C(20)=28, C(21)=27, C(22)=26, C(23)=25, C(24)=24, C(25)=23, C(26)=22, C(27)=21, C(28)=20, C(29)=19, C(30)=18, C(31)=17.

Chaque enroulement circonférentiel 30 comprend une portion circonférentielle d'un monofilament métallique 34 et une couche 36 d'un matériau revêtant la portion du monofilament métallique 34. Le matériau polymérique de la couche 36 présente une densité inférieure à la densité du monofilament métallique 34. Ici, le matériau constituant la couche présente une densité inférieure ou égale à 3, de préférence inférieure ou égale à 2 et plus préférentiellement inférieure ou égale à 1,5 et ici sensiblement égale à 1,2. Le matériau constituant la couche 36 est un matériau polymérique à base d'une composition élastomérique réticulable, ici identique à la composition élastomérique réticulable de la gaine 40.

Au sein du pneumatique 10, le matériau polymérique de la couche 36 et la composition réticulable de la gaine 40 ayant flués lors du procédé de fabrication du pneumatique 10 décrit ci-dessous, les caractéristiques géométriques de la couche 36 et de la gaine 40 sont variables. En effet, le pneumatique 10 est obtenu par un procédé de fabrication comprenant une étape d'assemblage d'une ébauche crue du pneumatique 10 comprenant une étape de noyage de tringle dans au moins une composition élastomérique réticulable. En l'espèce, l'étape de noyage est une étape de mise sous pression de l'ébauche crue entrainant un fluage d'une part, du matériau polymérique de la couche 36 entre les enroulements circonférentiels 30 et, d'autre part, de la composition élastomérique réticulable de la gaine 40 radialement et axialement vers les enroulements circonférentiels 30 radialement et axialement externes délimitant les faces F1 à F6, noyant ainsi la tringle dans la composition élastomérique réticulable de la gaine 40.

Puis, le procédé comprend une étape de chauffage de l'ébauche crue de façon à faire réticuler la composition élastomérique réticulable dans laquelle est noyée la tringle 28. Cette étape de chauffage entraine un fluage supplémentaire du matériau polymérique de la couche 36 entre les enroulements circonférentiels 30 et de la composition élastomérique réticulable de la gaine 40 radialement et axialement vers et entre les enroulements circonférentiels 30 radialement et axialement externes délimitant les faces F1 à F6.

En référence à la figure 4, préalablement au procédé de fabrication du pneumatique décrit ci-dessus, c'est-à-dire préalablement à tout fluage du matériau polymérique de la couche 36 et de la composition élastomérique réticulable de la gaine 40, chaque enroulement circonférentiel 30 comprend une portion circonférentielle d'un monofilament métallique 34 et la couche 36 du matériau polymérique revêtant la portion du monofilament métallique 34. Dans le plan de coupe radial XY parallèle à l'axe principal A de la tringle 28, la portion de monofilament métallique 34 de chaque enroulement circonférentiel 30 présente un diamètre d et chaque enroulement circonférentiel 30 est inscrit dans un cercle de diamètre D. En l'espèce, la couche 36 de matériau polymérique forme une gaine 38 de section sensiblement tubulaire d'épaisseur égale à (D-d)/2.

Le diamètre d de la portion de monofilament métallique 34 de chaque enroulement circonférentiel 30 est strictement inférieur à 3,00 mm, de préférence va de 1,25 mm à 2,90 mm, plus préférentiellement de 1,60 à 2,50 mm et encore plus préférentiellement de 1,80 mm à 2,40 mm et est ici sensiblement égal à 2,00 mm. La résistance mécanique du monofilament métallique est ici égale à 2070 MPa.

Le diamètre D de la gaine 38 est strictement inférieur à 3,35 mm, de préférence va de 1,75 mm à 3,30 mm, plus préférentiellement va de 2,30 mm à 3,30 mm et encore plus préférentiellement va de 2,50 mm à 3,30 mm. Dans ce premier mode de réalisation, D va de 2,80 mm à 3,30 mm et est ici sensiblement égal à 3,20 mm.

L'épaisseur (D-d)/2 de la gaine 38 de section sensiblement tubulaire est supérieure ou égale à 0,18 mm, de préférence va de 0,18 mm à 1,00 mm et plus préférentiellement va de 0,25 mm à 0,80 mm. Dans ce premier mode de réalisation, l'épaisseur (D-d)/2 va de 0,40 mm à 0,80 mm et de préférence 0,50 mm à 0,70 mm et est ici sensiblement égale à 0,60 mm.

La tringle 28 présente une masse M ici égale à 123300 g. La masse de métal Ma égale à la masse du monofilament métallique 34 ici égale à 99500 g. Les masses M et Ma sont telles que, exprimées en g, Ma/M est supérieur ou égal à 0,50, de préférence supérieur ou égal à 0,75 et inférieur ou égal à 0,95, de préférence inférieur ou égal à 0,92 et plus préférentiellement inférieur ou égal à 0,90. Dans ce premier mode de réalisation, Ma/M est inférieur ou égal à 0,85 et ici égal à 0,81.

Dans le plan de coupe radial XY parallèle à l'axe principal A de la tringle 28, chaque enroulement circonférentiel 30 présente une section de monofilament métallique de surface Sa= π x (d/2)² et ici égale à 3,14 mm². Dans ce même plan XY, chaque enroulement circonférentiel 30 présente une section de surface S=π x (D/2)² et ici égale à 8,04 mm². Les surfaces Sa et S sont telles que, exprimées en mm², le rapport Sa/S est supérieur ou égal à 0,30, de préférence à 0,35 et inférieur ou égal à 0,75, de préférence inférieur ou égal à 0,65, plus préférentiellement inférieur ou égal à 0,60. Dans ce premier mode de réalisation, Sa/S est inférieur ou égal à 0,50, de préférence inférieur ou égal à 0,45 et ici égal à 0,39.

Comme illustré sur la figure 2, la tringle 28 présente un diamètre moyen Dm, un diamètre intérieur Dint et un diamètre extérieur Dext.

Le diamètre moyen Dm est défini comme la distance radiale séparant radialement, dans le plan de coupe radial XY parallèle à l'axe principal A de la tringle 28, les centres des cercles U1, U2 circonscrits à chaque demi-section de la tringle 28 dans le plan de coupe radial XY. Ici, Dm=5208,6 mm. Le rapport 1000 x M/ (N x S x π x Dm) est supérieur ou égal à 1,00, de préférence supérieur ou égal à 1,15 et inférieur ou égal à 2,10, de préférence inférieur ou égal à 2,00, plus préférentiellement inférieur ou égal à 1,75. Dans ce premier mode de réalisation, 1000 x M/ (N x S x π x Dm) est inférieur ou égal à 1,50, de préférence inférieur ou égal à 1,35 et ici égal à 1,25.

Le diamètre intérieur Dint est défini comme la distance séparant radialement les enroulements circonférentiels radialement les plus internes de la tringle. En d'autres termes, Dint=Dm-Ha avec Ha la hauteur selon la direction radiale de chaque demi-section de la tringle 28 définie comme la distance séparant radialement les enroulements circonférentiels radialement les plus internes des enroulements circonférentiels radialement les plus externes.

Le diamètre extérieur Dext est défini comme la distance séparant radialement les enroulements circonférentiels radialement les plus internes de la tringle. En d'autres termes, Dext=Dm+Ha.

La largeur La selon la direction axiale X d'une demi-section de la tringle 28 est ici égale à 99,2 mm. La hauteur Ha selon la direction radiale Y de cette demi-section est ici égale à 79,6 mm.

Conformément l'invention, le rapport D/d est supérieur ou égal à 1,15 et inférieur ou égal à 2. De préférence, D/d va de 1,30 à 1,80 et est ici égal à 1,6.

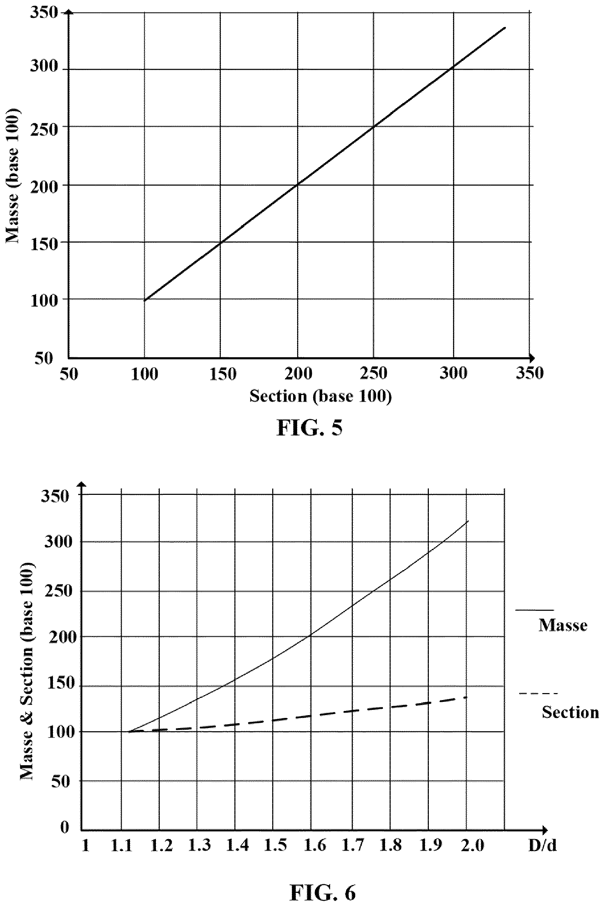

On a représenté sur la figure 5, les variations, en base 100, de la masse en fonction de la section générale de la tringle de l'état de la technique pour laquelle D/d=1,11. La section générale est définie par le produit de la largeur La selon la direction axiale d'une demi-section par la hauteur Ha selon la direction radiale de cette demi-section. On note que l'augmentation de la masse est linéaire avec l'augmentation de la section. Ainsi, pour avoir une tringle présentant une section deux fois plus grande (section égale à 200), la masse de la tringle a doublé (masse égale à 200).

Grâce à l'invention, et comme cela est visible sur la figure 6, on peut désormais obtenir une tringle présentant une section deux fois plus grande en augmentant la masse uniquement d'environ 30% grâce à un rapport D/d sensiblement égal à 1,6. D'une manière plus générale, on démontre sur cette figure 6 que l'augmentation de la section de la tringle n'entraine pas nécessairement une augmentation du même ordre de la masse et ce d'autant plus que le rapport D/d est élevé.

On va maintenant décrire un procédé de fabrication selon l'invention de la tringle décrite ci-dessus.

Le procédé comprend une étape de revêtement du monofilament métallique 34 par la couche 36 de sorte que, dans un plan de coupe perpendiculaire à un axe principal du monofilament métallique 34 revêtu de la couche 36, le monofilament métallique 34 revêtu de la couche 36 est inscrit dans un cercle de diamètre D égal au diamètre de la gaine 38. En l'espèce, le matériau polymérique de la couche 36 est extrudé autour du monofilament métallique 34.

Puis, le procédé comprend une étape d'assemblage de la tringle 28 dans laquelle on enroule le monofilament métallique 34 revêtu de la couche 36 de façon à former les N enroulements circonférentiels du monofilament métallique 34 revêtu de la couche 36 autour de l'axe principal A de la tringle 28. Conformément à l'invention, on s'assure que l'étape de revêtement est réalisée de sorte que le rapport D/d soit supérieur ou égal à 1,15.

Enfin, le procédé comprend une étape d'enroulage en hélice d'une bande à base de la composition élastomérique réticulable de la gaine 40 autour des enroulements circonférentiels radialement et axialement externes de la tringle 28 de façon à former la gaine 40.

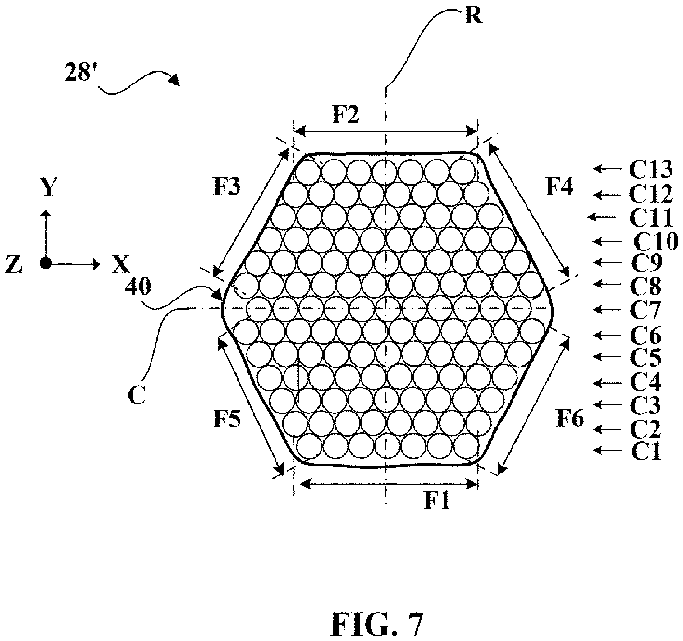

On va maintenant décrire une tringle 28' selon un deuxième mode de réalisation en référence à la figure 7. Les éléments analogues à ceux du premier mode de réalisation sont désignés par des références identiques.

A la différence du premier mode de réalisation, la tringle 28' selon le deuxième mode de réalisation est telle que :
- N va de préférence de 100 à 200 et plus préférentiellement de 100 à 150 et ici N=125,
- P va de préférence de 10 à 25 et plus préférentiellement de 10 à 20 et ici P=13,
- C(1)=7, C(2)=8, C(3)=9, C(4)=10, C(5)=11, C(6)=12, C(7)=11, C(8)=12, C(9)=11, C(10)=10, C(11)=9, C(12)=8, C(13)=7,
- D va de préférence de 2,50 mm à 2,90 mm et ici D=2,70 mm
- l'épaisseur (D-d)/2 va de préférence de 0,25 mm à 0,65 mm et très préférentiellement de 0,25 mm à 0,45 mm et est ici égale à 0,35 mm,
- le rapport Ma/M est préférentiellement inférieur ou égal à 0,90 et ici égal à 0,89, M=7410 g et Ma=6580 g,
- le rapport Sa/S est préférentiellement inférieur ou égal à 0,60 et ici égal à 0,55, S=5,72 mm2 et Sa=3,14 mm2,
- Dm=2076,40 mm, S=5,72 mm2 et le rapport 1000 x M/ (N x S x π x Dm) est préférentiellement inférieur ou égal à 1,70 et ici égal à 1,59.

Les caractéristiques des tringles 28 et 28' sont rassemblées dans le tableau 1 ci-dessous ainsi que les caractéristiques des tringles EDT1, EDT2 de l'état de la technique respectivement correspondantes.

**Tableau 1**

| | EDT1 | Tringle 28 | EDT2 | Tringle 28' |
|---|---|---|---|---|
| N | 395 | 750 | 179 | 125 |
| P | 23 | 31 | 15 | 13 |
| Ha (mm) | 65,2 | 79,6 | 27,3 | 32,4 |
| La (mm) | 71,9 | 99,2 | 35,3 | 28,9 |
| Dint (mm) | 5086 | 5129 | 2041 | 2044 |
| Dm (mm) | 5151,2 | 5208,6 | 2068,3 | 2076,4 |
| Dext (mm) | 5216,4 | 5288,2 | 2095,6 | 2108,8 |
| d (mm) | 3 | 2 | 2 | 2 |
| D (mm) | 3,35 | 3,20 | 2,25 | 2,70 |
| (D-d)/2 (mm) | 0,175 | 0,60 | 0,125 | 0,35 |
| D/d | 1,11 | 1,60 | 1,13 | 1,35 |
| Ma (g) | 115400 | 99500 | 9400 | 6580 |
| M (g) | 119800 | 123300 | 9780 | 7410 |
| Ma/M | 0,96 | 0,81 | 0,96 | 0,89 |
| Sa (mm²) | 7,07 | 3,14 | 3,14 | 3,14 |
| S (mm²) | 8,81 | 8,04 | 3,97 | 5,72 |
| Sa/S | 0,80 | 0,39 | 0,79 | 0,55 |
| 1000*M/(N*S*Dm) | 2,13 | 1,25 | 2,12 | 1,59 |
| FR (daN) | 369325 | 369750 | 88247 | 61625 |

En comparant la tringle EDT1 et la tringle 28, on note qu'en augmentant la section générale de la tringle de 68%, la masse reste sensiblement constante (augmentation limitée à 3%) et ce grâce à l'utilisation d'une couche telle que D/d est supérieur ou égal à 1,15, ici égal à 1,60.

En comparant la tringle EDT2 et la tringle 28', on note qu'en conservant sensiblement la même section générale (baisse de 3%), la masse est réduite de 24% et ce encore grâce à l'utilisation d'une couche telle que D/d est supérieur ou égal à 1,15, ici égal à 1,35.

## Revendications

1. Tringle (28, 28') pour pneumatique (10), la tringle étant de révolution autour d'un axe principal (A) de la tringle et comprenant N>1 enroulements circonférentiels (30) autour de l'axe principal (A) de la tringle (28, 28'), les N enroulements circonférentiels (30) étant agencés sur P>1 couches C(i) radialement superposées, i variant de 1 à P, chaque couche C(i) comprenant L(i)>1 enroulements circonférentiels (30) axialement juxtaposés, chaque enroulement circonférentiel (30) comprenant une portion d'un monofilament métallique (34) de diamètre d et une couche (36) d'un matériau présentant une densité inférieure à la densité du monofilament métallique (34), la couche (36) revêtant la portion de monofilament métallique (34) de sorte que chaque enroulement circonférentiel (30) est, dans un plan de coupe radial (XY) parallèle à l'axe principal (A) de la tringle, inscrit dans un cercle de diamètre D ayant un rapport D/d supérieur ou égal à 1,15, **caractérisée en ce que** la tringle présente :
- un diamètre moyen Dm, exprimé en mm et défini comme la distance séparant radialement, dans le plan de coupe radial (XY) parallèle à l'axe principal (A) de la tringle, les centres des cercles circonscrits (U1, U2) à chaque demi-section de la tringle dans le plan de coupe radial (XY),
- une masse M, exprimée en g,
- chaque enroulement circonférentiel (30) présentant, dans le plan de coupe radial (XY) parallèle à l'axe principal (A) de la tringle, une section de surface S, exprimée en mm²,
et dans laquelle 1000 x M/ (N x S x π x Dm) est inférieur ou égal à 2,10.

2. Tringle (28, 28') selon la revendication précédente, dans laquelle 1000 x M/ (N x S x π x Dm) est inférieur ou égal à 2,00 et de préférence inférieur ou égal à 1,75.

3. Tringle (28, 28') selon l'une quelconque des revendications précédentes, dans laquelle la densité du matériau de la couche (36) est inférieure ou égale à 3, de préférence inférieure ou égale à 2 et plus préférentiellement inférieure ou égale à 1,5.

4. Tringle (28, 28') selon l'une quelconque des revendications précédentes, dans laquelle le rapport D/d est inférieur ou égal à 2, de préférence allant de 1,30 à 1,80.

5. Tringle (28, 28') selon l'une quelconque des revendications précédentes, dans laquelle la couche (36) forme une gaine (38) de section sensiblement tubulaire d'épaisseur égale à (D-d)/2.

6. Tringle (28, 28') selon l'une quelconque des revendications précédentes, présentant une masse M, exprimée en g, et une masse métallique Ma égale à la masse du monofilament métallique (34), exprimée en g telles que Ma/M est inférieur ou égal à 0,95, de préférence inférieur ou égal à 0,92 et plus préférentiellement inférieur ou égal à 0,90.

7. Tringle (28, 28') selon l'une quelconque des revendications précédentes, dans laquelle, dans le plan de coupe radial (XY) parallèle à l'axe principal (A) de la tringle, chaque enroulement circonférentiel (30) présentant une section de monofilament métallique (34) de surface Sa, exprimée en mm2, et chaque enroulement circonférentiel (30) présentant une section de surface S, exprimée en mm², le rapport Sa/S est inférieur ou égal à 0,75, de préférence inférieur ou égal à 0,65, plus préférentiellement inférieur ou égal à 0,60.

8. Tringle (28, 28') selon l'une quelconque des revendications précédentes, dans laquelle N va de 100 à 1000.

9. Tringle (28, 28') selon l'une quelconque des revendications précédentes, dans laquelle P va de 10 à 40.

10. Tringle (28, 28') selon l'une quelconque des revendications précédentes, présentant, dans un plan de coupe radial (XY) parallèle à l'axe principal (A) de la tringle, une demi-section de forme sensiblement hexagonale.

11. Tringle (28, 28') selon l'une quelconque des revendications précédentes, dans laquelle la couche C(1) étant la couche radialement la plus interne par rapport à l'axe principal (A) de la tringle et la couche C(P) étant la couche radialement la plus externe par rapport à l'axe principal (A) de la tringle, il existe une couche C(k) avec k ∈ ]1, P[ agencée radialement entre la couche C(1) et la couche C(P) telle que :
- pour i allant de 2 à k-1, L(i-1)<L(i),
- L(k)<L(k-1) et L(k)<L(k+1) et L(k-1)=L(k+1),
- pour i allant de k+1 à P-1, L(i)>L(i+1),
chaque couche C(i) étant agencée radialement à l'extérieur de la couche C(i-1).

12. Tringle (28, 28') selon l'une quelconque des revendications précédentes, dans laquelle, chaque couche C(i) étant agencée radialement à l'extérieur de la couche C(i-1), |L(i)-L(i-1)|=1 pour i allant de 2 à P.

13. Tringle (28, 28') selon l'une quelconque des revendications précédentes, dans laquelle le matériau de la couche (36) est à base d'une composition élastomérique réticulable.

14. Pneumatique (10), **caractérisé en ce qu'**il est obtenu par un procédé comprenant :
- une étape d'assemblage d'une ébauche crue du pneumatique comprenant une étape de noyage d'une tringle (28, 28') selon l'une quelconque des revendications précédentes dans une composition élastomérique réticulable,
- une étape de chauffage de l'ébauche crue du pneumatique de façon à faire réticuler la composition élastomérique réticulable dans laquelle est noyée la tringle (28, 28').

15. Procédé de fabrication d'une tringle (28, 28') pour pneumatique, la tringle (28, 28') étant de révolution autour d'un axe principal (A) de la tringle, comprenant :
- une étape de revêtement d'un monofilament métallique (34) de diamètre d par une couche (36) d'un matériau présentant une densité inférieure à la densité du monofilament métallique (34) de sorte que, dans un plan de coupe (XY) perpendiculaire à un axe principal du monofilament métallique (34) revêtu de la couche (36), le monofilament métallique (34) revêtu de la couche (36) est inscrit dans un cercle de diamètre D,
- une étape d'assemblage de la tringle dans laquelle on enroule le monofilament métallique (34) revêtu de la couche (36) de façon à former N>1 enroulements circonférentiels (30) du monofilament métallique (34) revêtu de la couche (36) autour de l'axe principal (A) de la tringle, chaque enroulement circonférentiel (30) comprenant une portion du monofilament métallique (34) et la couche (36) revêtant la portion de monofilament métallique (34), les N enroulements circonférentiels (30) étant agencés sur P>1 couches C(i) radialement superposées, i variant de 1 à P, chaque couche C(i) comprenant L(i)>1 enroulements circonférentiels (30) axialement juxtaposés, l'étape de revêtement étant réalisée de sorte que le rapport D/d est supérieur ou égal à 1,15, **caractérisé en ce que** l'étape de revêtement est réalisée de sorte que la tringle présente :
- un diamètre moyen Dm, exprimé en mm et défini comme la distance séparant radialement, dans le plan de coupe radial (XY) parallèle à l'axe principal (A) de la tringle, les centres des cercles circonscrits (U1, U2) à chaque demi-section de la tringle dans le plan de coupe radial (XY),
- une masse M, exprimée en g,
- chaque enroulement circonférentiel (30) présentant, dans le plan de coupe radial (XY) parallèle à l'axe principal (A) de la tringle, une section de surface S, exprimée en mm²,
et dans laquelle 1000 x M/ (N x S x π x Dm) est inférieur ou égal à 2,10.

## Patentansprüche

1. Wulstkern (28, 28') für einen Luftreifen (10), wobei der Wulstkern um eine Hauptachse (A) des Wulstkerns herum dreht und N>1 umfängliche Windungen (30) um die Hauptachse (A) des Wulstkerns (28, 28') herum umfasst, wobei die N umfänglichen Windungen (30) auf P>1 radial übereinander liegenden Lagen C(i) angeordnet sind, wobei i von 1 bis P variiert, wobei jede Lage C(i) L(i)>1 axial nebeneinander liegende umfängliche Windungen (30) umfasst, wobei jede umfängliche Windung (30) einen Abschnitt eines metallischen Monofilaments (34) mit dem Durchmesser d und eine Lage (36) aus einem Material, das eine geringere Dichte als die Dichte des metallischen Monofilaments (34) aufweist, umfasst, wobei die Lage (36) den Abschnitt des metallischen Monofilaments (34) so bedeckt, dass jede umfängliche Windung (30), in einer radialen Schnittebene (XY) parallel zur Hauptachse (A) des Wulstkerns, in einen Kreis mit dem Durchmesser D einbeschrieben ist, der ein Verhältnis D/d größer als oder gleich 1,15 hat, **dadurch gekennzeichnet, dass** der Wulstkern aufweist:
- einen mittleren Durchmesser Dm, ausgedrückt in mm und definiert als der Abstand, der radial, in der radialen Schnittebene (XY) parallel zu der Hauptachse (A) des Wulstkerns, die Mittelpunkte der jedem Halbschnitt des Wulstkerns in der radialen Schnittebene (XY) umbeschriebenen Kreise (U1, U2) trennt,
- eine Masse M, ausgedrückt in g,
- wobei jede umfängliche Windung (30), in der radialen Schnittebene (XY) parallel zu der Hauptachse (A) des Wulstkerns, einen Querschnitt mit der Fläche S, ausgedrückt in mm², aufweist,
und wobei 1000 x M/ (N × S × *π* × Dm) kleiner als oder gleich 2,10 ist.

2. Wulstkern (28, 28') nach dem vorhergehenden Anspruch, bei dem 1000 x M/ (N × S × *π* × Dm) kleiner als oder gleich 2,00 und bevorzugt kleiner als oder gleich 1,75 ist.

3. Wulstkern (28, 28') nach einem der vorhergehenden Ansprüche, bei dem die Dichte des Materials der Lage (36) kleiner als oder gleich 3, bevorzugt kleiner als oder gleich 2 und noch bevorzugter kleiner als oder gleich 1,5 ist.

4. Wulstkern (28, 28') nach einem der vorhergehenden Ansprüche, bei dem das Verhältnis D/d kleiner als oder gleich 2 ist, bevorzugt von 1,30 und 1,80 beträgt.

5. Wulstkern (28, 28') nach einem der vorhergehenden Ansprüche, bei dem die Lage (36) einen Mantel (38) mit im Wesentlichen röhrenförmigem Querschnitt mit einer Dicke gleich (D-d)/2 bildet.

6. Wulstkern (28, 28') nach einem der vorhergehenden Ansprüche, aufweisend eine Masse M, ausgedrückt in g, und eine metallische Masse Ma gleich der Masse des metallischen Monofilaments (34), ausgedrückt in g, die dergestalt sind, dass Ma/M kleiner als oder gleich 0,95, bevorzugt kleiner als oder gleich 0,92 und noch bevorzugter kleiner als oder gleich 0,90 ist.

7. Wulstkern (28, 28') nach einem der vorhergehenden Ansprüche, bei dem, in der radialen Schnittebene (XY) parallel zur Hauptachse (A) des Wulstkerns, wenn jede umfängliche Windung (30) einen Querschnitt des metallischen Monofilaments (34) mit der Fläche Sa, ausgedrückt in mm2, aufweist, und wenn jede umfängliche Windung (30) einen Querschnitt mit der Fläche S, ausgedrückt in mm², aufweist, das Verhältnis Sa/S kleiner als oder gleich 0,75, bevorzugt kleiner als oder gleich 0,65, noch bevorzugter kleiner als oder gleich 0,60 ist.

8. Wulstkern (28, 28') nach einem der vorhergehenden Ansprüche, bei dem N von 100 bis 1000 beträgt.

9. Wulstkern (28, 28') nach einem der vorhergehenden Ansprüche, bei dem P von 10 und 40 beträgt.

10. Wulstkern (28, 28') nach einem der vorhergehenden Ansprüche, aufweisend, in einer radialen Schnittebene (XY) parallel zur Hauptachse (A) des Wulstkerns, einen Halbschnitt von im Wesentlichen sechseckiger Form.

11. Wulstkern (28, 28') nach einem der vorhergehenden Ansprüche, bei dem, wenn die Lage C(1) die radial innerste Lage in Bezug auf die Hauptachse (A) des Wulstkerns ist und wenn die Lage C(P) die radial äußerste Lage in Bezug auf die Hauptachse (A) des Wulstkerns ist, es eine Lage C(k) mit k ∈ ]1, P[ gibt, die radial zwischen der Lage C(1) und der Lage C(P) angeordnet ist, so dass:
- für i von 2 bis k-1, L(i-1)<L(i),
- L(k)<L(k-1) und L(k)<L(k+1) und L(k-1)=L(k+1),
- für i von k+1 bis P-1, L(i)> L(i+1),
wobei jede Lage C(i) radial außerhalb der Lage C(i-1) angeordnet ist.

12. Wulstkern (28, 28') nach einem der vorhergehenden Ansprüche, bei dem, wenn jede Lage C(i) radial außerhalb der Lage C(i-1) angeordnet ist, |L(i)-L(i-1) | =1 für i von 2 bis P.

13. Wulstkern (28, 28') nach einem der vorhergehenden Ansprüche, bei dem das Material der Lage (36) auf Basis einer vernetzbaren Elastomerzusammensetzung ist.

14. Luftreifen (10), **dadurch gekennzeichnet, dass** er mit einem Verfahren erhalten wird, umfassend:
- einen Schritt des Montierens eines Rohlings des Luftreifens, umfassend einen Schritt des Einbettens eines Wulstkerns (28, 28') nach einem der vorhergehenden Ansprüche in eine vernetzbare Elastomerzusammensetzung,
- einen Schritt des Erhitzens des Rohlings des Luftreifens, so dass die vernetzbare Elastomerzusammensetzung, in die der Wulstkern (28, 28') eingebettet ist, vernetzt.

15. Verfahren zur Herstellung eines Wulstkerns (28, 28') für einen Luftreifen, wobei der Wulstkern (28, 28') um eine Hauptachse (A) des Wulstkerns herum dreht, umfassend:
- einen Schritt des Bedeckens eines metallischen Monofilaments (34) mit dem Durchmesser d mit einer Lage (36) aus einem Material, das eine geringere Dichte als die Dichte des metallischen Monofilaments (34) aufweist, so dass, in einer Schnittebene (XY) senkrecht zu einer Hauptachse des mit der Lage (36) bedeckten metallischen Monofilaments (34), das mit der Lage (36) bedeckte metallische Monofilament (34) in einen Kreis mit dem Durchmesser D einbeschrieben ist,
- einen Schritt des Montierens des Wulstkerns, bei dem man das mit der Lage (36) bedeckte metallische Monofilament (34) so wickelt, dass N>1 umfängliche Windungen (30) des mit der Lage (36) bedeckten metallischen Monofilaments (34) um die Hauptachse (A) des Wulstkerns herum gebildet werden, wobei jede umfängliche Windung (30) einen Abschnitt des metallischen Monofilaments (34) und die den Abschnitt des metallischen Monofilaments (34) bedeckende Lage (36) umfasst, wobei die N umfänglichen Windungen (30) über P>1 radial übereinander liegende Lagen C(i) angeordnet sind, wobei i von 1 bis P variiert, wobei jede Lage C(i) L(i)>1 axial nebeneinander liegende umfängliche Windungen (30) umfasst, wobei der Schritt des Bedeckens so ausgeführt wird, dass das Verhältnis D/d größer als oder gleich 1,15 ist, **dadurch gekennzeichnet, dass** der Schritt des Bedeckens so ausgeführt wird, dass der Wulstkern aufweist:
- einen mittleren Durchmesser Dm, ausgedrückt in mm und definiert als der Abstand, der radial, in der radialen Schnittebene (XY) parallel zu der Hauptachse (A) des Wulstkerns, die Mittelpunkte der jedem Halbschnitt des Wulstkerns in der radialen Schnittebene (XY) umbeschriebenen Kreise (U1, U2) trennt,
- eine Masse M, ausgedrückt in g,
- wobei jede umfängliche Windung (30), in der radialen Schnittebene (XY) parallel zu der Hauptachse (A) des Wulstkerns, einen Querschnitt mit der Fläche S, ausgedrückt in mm², aufweist,
und wobei 1000 x M/ (N × S × *π* × Dm) kleiner als oder gleich 2,10 ist.

## Claims

1. Bead wire (28, 28') for a tyre (10), the bead wire exhibiting symmetry of revolution about a main axis (A) of the bead wire and comprising N>1 circumferential windings (30) about the main axis (A) of the bead wire (28, 28'), the N circumferential windings (30) being arranged in P>1 radially superposed layers C(i), i ranging from 1 to P, each layer C(i) comprising L(i)>1 axially juxtaposed circumferential windings (30), each circumferential winding (30) comprising a portion of a metal monofilament (34) of diameter d and a layer (36) of a material having a density less than the density of the metal monofilament (34), the layer (36) coating the portion of metal monofilament (34) such that each circumferential winding (30) is, in a radial section plane (XY) parallel to the main axis (A) of the bead wire, inscribed in a circle of diameter D having a ratio D/d greater than or equal to 1.15, **characterized in that** the bead wire has:
- a mean diameter Dm, expressed in mm and defined as the distance radially separating, in the radial section plane (XY) parallel to the main axis (A) of the bead wire, the centres of the circles (U1, U2) circumscribed on each half-section of the bead wire in the radial section plane (XY),
- a mass M, expressed in g,
- each circumferential winding (30) having, in the radial section plane (XY) parallel to the
main axis (A) of the bead wire, a section of area S, expressed in mm²,
and wherein 1000 x M/(N x S x π x Dm) is less than or equal to 2.10.

2. Bead wire (28, 28') according to the preceding claim, wherein 1000 x M/(N x S x π x Dm) is less than or equal to 2.00 and preferably less than or equal to 1.75.

3. Bead wire (28, 28') according to either one of the preceding claims, wherein the density of the material of the layer (36) is less than or equal to 3, preferably less than or equal to 2, and more preferably less than or equal to 1.5.

4. Bead wire (28, 28') according to any one of the preceding claims, wherein the ratio D/d is less than or equal to 2, preferably ranging from 1.30 to 1.80.

5. Bead wire (28, 28') according to any one of the preceding claims, wherein the layer (36) forms a sheath (38) of substantially tubular section with a thickness equal to (D-d)/2.

6. Bead wire (28, 28') according to any one of the preceding claims, which has a mass M, expressed in g, and a metal mass Ma equal to the mass of the metal monofilament (34), expressed in g, such that Ma/M is less than or equal to 0.95, preferably less than or equal to 0.92, and more preferably less than or equal to 0.90.

7. Bead wire (28, 28') according to any one of the preceding claims, wherein, in the radial section plane (XY) parallel to the main axis (A) of the bead wire, with each circumferential winding (30) having a metal monofilament (34) section of area Sa, expressed in mm², and each circumferential winding (30) having a section of area S, expressed in mm², the ratio Sa/S is less than or equal to 0.75, preferably less than or equal to 0.65, more preferably less than or equal to 0.60.

8. Bead wire (28, 28') according to any one of the preceding claims, wherein N ranges from 100 to 1000.

9. Bead wire (28, 28') according to any one of the preceding claims, wherein P ranges from 10 to 40.

10. Bead wire (28, 28') according to any one of the preceding claims, which has, in a radial section plane (XY) parallel to the main axis (A) of the bead wire, a half-section of substantially hexagonal shape.

11. Bead wire (28, 28') according to any one of the preceding claims, wherein, with the layer C(1) being the radially innermost layer with respect to the main axis (A) of the bead wire and the layer C(P) being the radially outermost layer with respect to the main axis (A) of the bead wire, there is a layer C(k), with k ∈ ]1, P[, arranged radially between the layer C(1) and the layer C(P) such that:
- when i ranges from 2 to k-1, L(i-1)<L(i),
- L(k)<L(k-1) and L(k)<L(k+1) and L(k-1)=L(k+1),
- when i ranges from k+1 to P-1, L(i)>L(i+1),
each layer C(i) being arranged radially on the outside of the layer C(i-1).

12. Bead wire (28, 28') according to any one of the preceding claims, wherein, with each layer C(i) being arranged radially on the outside of the layer C(i-1), |L(i)-L(i-1 )|=1 when i ranges from 2 to P.

13. Bead wire (28, 28') according to any one of the preceding claims, wherein the material of the layer (36) is based on a crosslinkable elastomer composition.

14. Tyre (10), **characterized in that** it is obtained by way of a method comprising:
- a step of assembling a green form of the tyre comprising a step of embedding a bead wire (28, 28') according to any one of the preceding claims in a crosslinkable elastomer composition,
- a step of heating the green form of the tyre so as to crosslink the crosslinkable elastomer composition in which the bead wire (28, 28') is embedded.

15. Method for manufacturing a bead wire (28, 28') for a tyre, the bead wire (28, 28') exhibiting symmetry of revolution about a main axis (A) of the bead wire, comprising:
- a step of coating a metal monofilament (34) of diameter d with a layer (36) of a material having a density less than the density of the metal monofilament (34) such that, in a section plane (XY) perpendicular to a main axis of the metal monofilament (34) coated with the layer (36), the metal monofilament (34) coated with the layer (36) is inscribed in a circle of diameter D,
- a step of assembling the bead wire, in which the metal monofilament (34) coated with the layer (36) is wound so as to form N>1 circumferential windings (30) of the metal monofilament (34) coated with the layer (36) about the main axis (A) of the bead wire, each circumferential winding (30) comprising a portion of the metal monofilament (34) and the layer (36) coating the portion of metal monofilament (34), the N circumferential windings (30) being arranged in P>1 radially superposed layers C(i), i ranging from 1 to P, each layer C(i) comprising L(i)>1 axially juxtaposed circumferential windings (30), the coating step is carried out such that the ratio D/d is greater than or equal to 1.15, **characterized in that** such that the bead wire has:
- a mean diameter Dm, expressed in mm and defined as the distance radially separating, in the radial section plane (XY) parallel to the main axis (A) of the bead wire, the centres of the circles (U1, U2) circumscribed on each half-section of the bead wire in the radial section plane (XY),
- a mass M, expressed in g,
- each circumferential winding (30) having, in the radial section plane (XY) parallel to the main axis (A) of the bead wire, a section of area S, expressed in mm²,
and wherein 1000 x M/(N x S x π x Dm) is less than or equal to 2.10.
